# EUROPÄISCHE PATENTSCHRIFT

(11) **EP 3 937 430 B1**
(45) Veröffentlichungstag und Bekanntmachung des Hinweises auf die Patenterteilung: **07.12.2022**
(21) Anmeldenummer: 20184476.8
(22) Anmeldetag: 07.07.2020
(51) Int. Cl.: H04L 12/28, G06K 9/62, G06N 20/00

(54) **VERFAHREN UND SYSTEM ZUR ERKENNUNG NETZWERKFÄHIGER GERÄTE IN EINEM HEIMNETZWERK**
METHOD AND SYSTEM FOR DETECTING NETWORK DEVICES IN A HOME NETWORK
PROCÉDÉ ET SYSTÈME DE DÉTECTION DE DISPOSITIFS DE RESEAU DANS UN RÉSEAU DOMESTIQUE

(43) Veröffentlichungstag der Anmeldung: 12.01.2022
(73) Patentinhaber: Deutsche Telekom AG, 53113 Bonn (DE)
(72) Erfinder: ELSESSER, Marcel, 64297 Darmstadt (DE); BARTETZKO FERNANDES, Leandro, 64711 Erbach (DE); WEIGEL, Thomas, 64331 Weiterstadt (DE); GRAF, Daniel, 69514 Laudenbach (DE); GÖBEL, Martin, 69483 Wald-Michelbach (DE); BÖHM, Ilyas, 69509 Mörlenbach (DE)
(74) Vertreter: Blumbach · Zinngrebe Patentanwälte PartG mbB

(56) Entgegenhaltungen:
- WO-A1-2020/101121
- CN-A- 108 803 506
- CN-A- 111 144 514
- US-A1- 2020 022 072

## Beschreibung

Die Erfindung betrifft allgemein Heimnetzwerke, und insbesondere ein Verfahren, ein mobiles Kommunikationsendgerät und ein System zur Erkennung netzwerkfähiger Geräte in einem Heimnetzwerk.

In einem Heimnetzwerk kommunizieren heute eine Vielzahl netzwerkfähiger Endgeräte miteinander. Beispiele für netzwerkfähige Endgeräte in einem Heimnetzwerk sind Computer wie PCs oder Laptops, Smartphones, Smart-TVs, netzwerkfähige Drucker, Netzwerkspeicher, Audiogeräte wie aktive Lautsprecher, sowie in zunehmendem Masse sogenannte Smart Home Devices. Solche Smart Home Devices dienen insbesondere der Automation netzwerkfähiger Haushaltsgeräte wie zum Beispiel Lampen, Heizkörpern, Jalousien, Kaffeemaschinen oder Kühlschränken. Typischerweise sind die netzwerkfähigen Geräte in einem Heimnetzwerk über einen Internetzugangsrouter (Internet Access Router) mit dem Internet verbindbar, wobei der Router zu diesem Zweck beispielsweise über DSL mit einem Internet-Provider verbunden sein kann.

Das Internet der Dinge, auch als "Internet of Things", oder kurz IoT, bezeichnet, ist ein Sammelbegriff für Technologien einer globalen Infrastruktur, die es ermöglicht, physische und virtuelle Gegenstände miteinander zu vernetzen und sie durch Informations- und Kommunikationstechniken zusammenarbeiten zu lassen. Mit Technologien des IoT implementierte Funktionen erlauben die Interaktion zwischen einem Nutzer und beliebigen vernetzten elektronischen Systemen sowie zwischen den Systemen an sich. Im Zuge der Entwicklung von IoT nimmt auch die Zahl von IoT-Geräten zu, die im Heimbereich eingesetzt werden können.

Die meisten netzwerkfähigen Geräte in einem Heimnetzwerk kommunizieren heute mittels WLAN (Wireless Local Area Network), wobei unter WLAN typischerweise ein lokales Funknetz verstanden wird, in welchem ein Kommunikationsstandard der IEEE-802.11-Familie eingesetzt wird.

Die Vielzahl an netzwerkfähigen Geräten in einem Heimnetzwerk überfordert viele Nutzer eines Heimnetzwerks. Die steigende Zahl an Smart Home Devices und/oder IoT-Geräten, die vor allem über WLAN ins Heimnetzwerk eingebunden werden müssen, führt dazu, dass Nutzer selbst ungewollt zum Administrator eines Netzwerks werden müssen. Dadurch entsteht das Bedürfnis seitens des Nutzers, sein Heimnetzwerk besser zu verstehen und möglichst viele Informationen auf einfache Weise zu erhalten. Dabei wird durch die Verwendung zusätzlicher Infrastruktur-Geräte wie WLAN Repeater, Powerline, etc. die Komplexität und Fehleranfälligkeit zusätzlich erhöht.

Es sind Möglichkeiten bekannt, dem Nutzer die Geräte seines Heimnetzwerks, die in der Regel über das IP-Protokoll verbunden sind, in Form von Listen darzustellen, zum Beispiel mit Hilfe einer Anwendungssoftware auf einem mit dem Netzwerk verbundenen Computer oder in einem browserbasierten Menü eines im Heimnetzwerk eingesetzten Routers. Da die Geräte sich aber über das IP-Protokoll oftmals nicht mit aussagekräftigen, "sprechenden" Namen melden, die einen Rückschluss auf das jeweilige Gerät geben, ist es für den Anwender schwierig nachzuvollziehen, um welches Gerät es sich jeweils wirklich handelt.

Dokument CN108803506 A offenbart ein Verfahren zur Identifizierung eines Industrieobjekts oder eines Haushaltsgeräts unter Verwendung von Bilderkennung und neuronalen Netzen. Eine Kamera nimmt ein Bild des zu erkennenden Objekts auf, das Bild wird an ein Mobiltelefon übertragen, das Mobiltelefon fügt einen Identifikationscode ein, der der Art des Objekts entspricht, und das Bild und der Code werden an einen Server übertragen. Der Server verwendet einen neuronalen Netzwerkalgorithmus, um das Objekt anhand der empfangenen Informationen zu identifizieren und sendet das Ergebnis an das Mobiltelefon. Das neuronale Modell wird mit den empfangenen Daten trainiert.

Es ist Aufgabe der Erfindung, einen Weg aufzuzeigen, wie netzwerkfähige Geräte in einem Heimnetzwerk besser und/oder einfacher erkannt werden können und wie Informationen zu netzwerkfähigen Geräten in einem Heimnetzwerk einem Nutzer des Heimnetzwerks besser und/oder einfacher zugänglich gemacht werden können.

Diese Aufgabe wird durch die Merkmale der unabhängigen Ansprüche gelöst. Vorteilhafte Ausführungsformen sind Gegenstand der abhängigen Ansprüche, wobei die jeweils angegebenen Merkmale und Vorteile in gleicher oder analoger Weise für den Gegenstand aller unabhängigen Ansprüche vorgesehen sein können.

Ein Kerngedanke der Erfindung kann darin gesehen werden, mit einem mobilen Kommunikationsendgerät, wie zum Beispiel einem Smartphone, ein netzwerkfähiges Gerät mittels einer Objekterkennung auf Grundlage einer Bildaufnahme des Gerätes zu erkennen und parallel einen Netzwerk-Scan durchzuführen, um Geräte zu erkennen, mit denen das mobile Kommunikationsendgerät über ein drahtloses Kommunikationsnetzwerk kommunizieren kann, sowie die Ergebnisse der Objekterkennung und die Ergebnisse der mittels Netzwerk-Scan erfolgten Geräteerkennung zusammenzuführen, um dem Nutzer des mobilen Kommunikationsendgerätes Informationen zu einem erkannten netzwerkfähigen Gerät anzuzeigen.

Die Erfindung wird nachfolgend anhand einiger Ausführungsbeispiele unter Bezugnahme auf die beigefügten Zeichnungen genauer beschrieben. Dabei bezeichnen gleiche Bezugszeichen in den Zeichnungen gleiche oder ähnliche Teile.

Es zeigen:
Fig. 1: eine schematische Abbildung zur Darstellung der Funktionsweise des Verfahrens zur Erkennung eines netzwerkfähigen Gerätes in einem Heimnetzwerk,
Fig. 2: eine schematische Abbildung einer bevorzugten Ausführungsform eines erfindungsgemäßen Systems,
Fig. 3: schematisch eine bevorzugte Ausführungsform eines erfindungsgemäßen mobilen Kommunikationsendgerätes,
Fig. 4: eine schematische Darstellung der Schritte eines Verfahrens zur Erkennung eines netzwerkfähigen Gerätes in einem Heimnetzwerk, und
Fig. 5: eine detailliertere schematische Darstellung einzelner in Fig. 4 dargestellter Schritte, wobei insbesondere der Ablauf einer Benutzerinteraktion näher dargestellt wird.

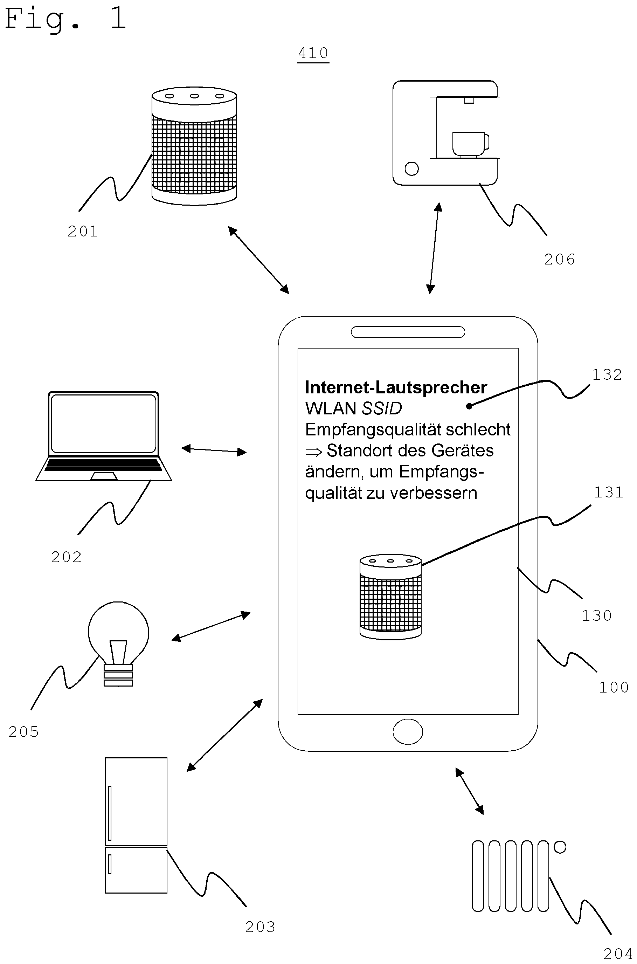

In Fig. 1 ist die Funktionsweise eines Verfahrens zur Erkennung eines netzwerkfähigen Gerätes in einem Heimnetzwerk schematisch dargestellt. Angenommen sei, dass ein Heimnetzwerk 410 eine Mehrzahl netzwerkfähiger Endgeräte 201 bis 206 umfasst, die miteinander kommunizieren können. In dem in Fig. 1 dargestellten Beispiel umfasst das Heimnetzwerk 410 einen aktiven, netzwerkfähigen Lautsprecher 201 und ein Laptop 202, sowie mehrere sogenannte Smart Home Devices in Form eines netzwerkfähigen Kühlschranks 203, eines netzwerkfähigen Heizkörpers 204, einer netzwerkfähigen Lampe 205 und einer netzwerkfähigen Kaffeemaschine 206. Einzelne oder alle der dargestellten netzwerkfähigen Endgeräte 201 bis 206 sind insbesondere über einen nicht dargestellten Internetzugangsrouter (Internet Access Router) mit dem Internet verbindbar.

Das Verfahren zur Erkennung eines netzwerkfähigen Gerätes in einem Heimnetzwerk dient dazu, mit Hilfe eines mobilen Kommunikationsendgerätes ein netzwerkfähiges Gerät, wie zum Beispiel eines der netzwerkfähigen Endgeräte 201 bis 206, mittels einer Objekterkennung auf Grundlage einer Bildaufnahme des Gerätes zu erkennen. In Fig. 1 ist als Beispiel eines solchen mobilen Kommunikationsendgerätes ein Mobiltelefon 100 dargestellt, welches insbesondere als Smartphone ausgebildet ist.

Zur Geräteerkennung wird mit einer Kamera des mobilen Kommunikationsendgerätes 100 ein Bild eines netzwerkfähigen Gerätes aufgenommen. Bei dem in Fig. 1 gezeigten Szenario wird ein Bild 131 eines netzwerkfähigen Gerätes, im dargestellten Beispiel des netzwerkfähigen Lautsprechers 201, aufgenommen, welches auf einem Bildschirm 130 des mobilen Kommunikationsendgerätes 100 angezeigt wird. Dieses netzwerkfähige Gerät wird mittels Objekterkennung erkannt und es werden zugehörige Netzwerkinformationen 132 auf dem Bildschirm eingeblendet, welche mit Hilfe eines von dem mobilen Kommunikationsendgerät 100 durchgeführten Netzwerk-Scans ermittelt wurden. Die Anzeige erfolgt vorzugsweise als AR (Augmented Reality), d.h. es wird ein Live-Bild auf dem Bildschirm 130 angezeigt, wobei ein im Bild enthaltenes Objekt automatisch erkannt wird und bei Erkennen eines netzwerkfähigen Gerätes zugehörige Netzwerkinformationen 132 in das Live-Bild eingeblendet werden. Der Einsatz von Augmented Reality erlaubt eine intuitive Handhabung durch den Nutzer und vereinfacht komplexe Sachverhalte, indem dem Nutzer automatisch Netzwerkinformationen 132 zu einem Gerät angezeigt werden, auf welches er die Kamera seines mobilen Kommunikationsendgeräts 100 richtet.

Auf diese Weise wird der Nutzer auf eine für den Nutzer möglichst einfache Weise dabei unterstützt, den Überblick über seine Geräte im Heimnetzwerk zu behalten, und deren Status anzeigen zu können, indem mit dem Smartphone 100 das jeweilige Gerät sowohl optisch als auch parallel per Netzwerkscan erkannt wird. So kann der Nutzer das Gerät physisch betrachten und erhält "on Screen" weitere Statusinformationen aus dem Netzwerk angezeigt. Dies ermöglicht es dem Nutzer zum Beispiel zu prüfen, ob das Gerät überhaupt im Netzwerk verfügbar ist.

Zur Objekterkennung könnte eine Applikation, oder kurz App, auf dem mobilen Kommunikationsendgerät 100 installiert und mit Bilddaten ausgestattet werden, die sie gegen die realen Bilder der Kamera prüft. Dies hätte jedoch verschiedene erhebliche Nachteile, insbesondere würde die App einen extrem großen Speicherbedarf aufweisen, da sie zu jedem bekannten Gerät entsprechende Bilddaten vorhalten müsste, und zudem könnte die App nur Geräte optisch erkennen, zu denen initial Bilddaten in der App bzw. in dem mobilen Kommunikationsgerät hinterlegt sind.

Es ist daher stattdessen eine dezentrale Geräteerkennung mittels einer von dem mobilen Kommunikationsendgerät 100 separaten Vorrichtung, insbesondere mittels eines zentralen Servers, vorgesehen, mit dem das mobile Kommunikationsendgerät 100 kommunizieren kann.

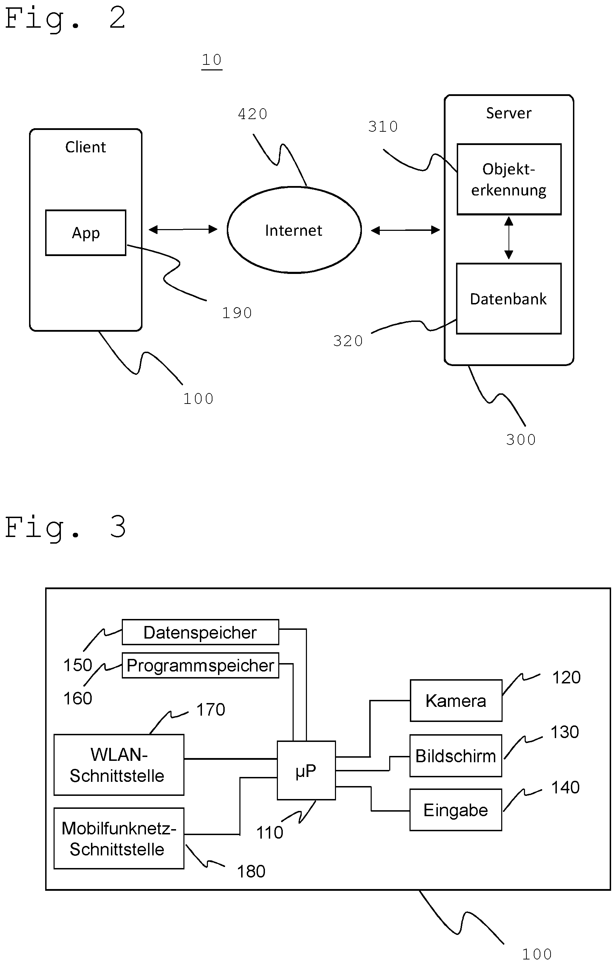

In Fig. 2 ist schematisch ein beispielhaftes System zur Erkennung eines netzwerkfähigen Gerätes in einem Heimnetzwerk, beispielsweise zur Erkennung eines der Geräte 201 bis 206 in dem in Fig. 1 dargestellten Heimnetzwerk 410, dargestellt. Das System umfasst im dargestellten Beispiel das mobile Kommunikationsendgerät 100 und einen zentralen Server 300, wobei auf dem mobilen Kommunikationsendgerät 100 eine Applikation 190 installiert ist, welche dazu ausgebildet ist, die Aufnahme eines digitalen Bildes mit einer digitalen Kamera des mobilen Kommunikationsendgeräts 100 und das Senden des aufgenommenen digitalen Bildes an den zentralen Server 300 zu bewirken, und wobei der zentrale Server 300 dazu ausgebildet ist, von dem mobilen Kommunikationsendgerät 100 ein digitales Bild zu empfangen und das empfangene digitale Bild in einer Datenbank 320 zu speichern. Die Datenbank 320 kann, wie in Fig. 2 dargestellt, im zentralen Server 300 angeordnet sein. Alternativ kann die Datenbank 320 auch separat derart angeordnet sein, dass der zentrale Server 300 auf diese zugreifen kann. Auch eine verteilte Datenbank ist denkbar.

Im dargestellten Ausführungsbeispiel umfasst der zentrale Server 300 eine Einheit 310 zur Objekterkennung, welche als Hardware-Modul, als Software-Modul oder als Kombination aus Hard- und Software ausgebildet sein kann. Die Objekterkennungs-Einheit 310 ist dazu ausgebildet, ein empfangenes Bild mittels eines künstlichen neuronalen Netzwerks (KNN) zu verarbeiten, wobei das empfangene Bild oder aus dem Bild abgeleitete Daten dem künstlichen neuronalen Netzwerk zugeführt werden und das künstliche neuronale Netzwerk daraus in Abhängigkeit einer parametrierbaren Verarbeitungskette eine Ausgangsgröße ermittelt.

Die parametrierbare Verarbeitungskette des künstlichen neuronalen Netzwerks umfasst insbesondere eine Vielzahl künstlicher Neuronen, die in mehreren Schichten angeordnet das künstliche neuronale Netzwerk bilden. Das künstliche neuronale Netzwerk umfasst zumindest eine Eingabeschicht und eine Ausgabeschicht, sowie vorteilhaft zwischen Eingabe- und Ausgabeschicht angeordnete verdeckte Schichten. Besonders vorteilhaft ist das künstliche neuronale Netzwerk als tiefes neuronales Netzwerk ausgebildet, dessen parametrierbare Verarbeitungskette eine Mehrzahl verdeckter Verarbeitungsschichten umfasst, wobei die Anzahl verdeckter Schichten vorteilhaft über 10, über 20 oder sogar über 100 liegen kann.

Die Bilddaten oder die aus den Bilddaten abgeleiteten Daten werden der Eingabeschicht des künstlichen neuronalen Netzwerks vorteilhaft in Form wenigstens eines Merkmalsvektors zugeführt, welcher eine vorgegebene Anzahl von Werten umfasst, wobei jeweils einer der Werte einem zugeordneten künstlichen Neuron der Eingabeschicht zugeführt wird. Das digitale Bild kann der Eingabeschicht des neuronalen Netzwerks vorteilhaft derart zugeführt werden, dass für jeden Bildpunkt ein Farbwert in Form eines Merkmalsvektors bereitgestellt wird, wobei dieser beispielsweise die Form eines dreidimensionalen Vektors im RGB-Farbraum hat. In dieser Ausführungsform weist die Eingabeschicht des neuronalen Netzwerks für jeden Bildpunkt des digitalen Bildes und für jeden der drei Farbwerte jeweils ein Neuron auf. Um Bilder mit verschiedenen Auflösungen zu verarbeiten kann das digitale Bild in ein Bild mit einer vorgegebenen Standardauflösung umgewandelt werden, bevor es dem künstlichen neuronalen Netzwerk zugeführt wird. Auch kann der Farbraum des Bildes auf eine vorgegebene Einstellung angepasst werden. Zu diesem Zweck können vorteilhaft verschiedene Optimierer zur Anpassung von Skalierung, Farbraum oder weiterer Bildparameter vorgesehen sein.

Die Ausgabeschicht des künstlichen neuronalen Netzwerks umfasst vorteilhaft eine mit der Anzahl N möglicher Geräteklassen übereinstimmende Anzahl an künstlichen Neuronen. Die Ausgabe des künstlichen neuronalen Netzwerks erfolgt somit vorteilhaft in Form eines N-dimensionalen Ausgabevektors, dessen N Komponenten durch die N Neuronen der Ausgabeschicht des künstlichen neuronalen Netzwerks bereitgestellt werden. Der N-dimensionale Ausgabevektor entspricht dabei vorteilhaft dem Ergebnis einer Softmax-Funktion, d.h. die Komponenten des Ausgabevektors summieren sich zu 1 und liegen jeweils zwischen 0 und 1, so dass der N-dimensionale Ausgabevektor als Wahrscheinlichkeitsverteilung bezüglich einer Zuordnung zu den möglichen Geräteklassen interpretiert werden kann.

Das künstliche neuronale Netzwerk wird vor dem Einsatz, d.h. bevor es zum Verarbeiten von Bilddaten eingesetzt wird, vorteilhaft unter Verwendung vorgegebener Trainings-Bilddaten trainiert, wobei durch das Training die parametrierbare Verarbeitungskette parametriert wird. In der Trainingsphase wird das künstliche neuronale Netzwerk insbesondere durch Modifikation von Gewichten der künstlichen Neuronen angepasst, wobei das Training vorteilhaft mittels überwachtem Lernen erfolgen kann.

Es sei angemerkt, dass durch kontinuierliches Training auch die Anzahl möglicher Geräteklassen, die das künstliche neuronale Netzwerk erkennen kann, erweitert werden kann, wobei sich dann die Anzahl der Neuronen der Ausgabeschicht des künstlichen neuronalen Netzwerks entsprechend erhöht.

Im Computer werden die Neuronen des künstlichen neuronalen Netzwerks über verschiedene Algorithmen und/oder Funktionen dargestellt. Eine Realisierung des künstlichen neuronalen Netzwerks kann beispielsweise mit dem Framework Tensorflow unter Verwendung der Programmiersprache Python 3 erfolgen. Es können auch sogenannte Tensor Processing Units eingesetzt werden, bei denen es sich um anwendungsspezifische Chips handelt, dazu entwickelt, das maschinelle Lernen zu unterstützen bzw. zu beschleunigen. Mit dieser Spezialhardware werden die Algorithmen der Programmbibliothek TensorFlow besonders schnell und effizient verarbeitet.

Ferner ist die Objekterkennungs-Einheit 310 dazu ausgebildet, das empfangene Bild in Abhängigkeit der von dem künstlichen neuronalen Netzwerk ermittelten Ausgangsgröße einer Geräteklasse zuzuordnen und eine erste Geräteklasseninformation in Abhängigkeit der zugeordneten Geräteklasse zu dem mobilen Kommunikationsendgerät 100, von dem das digitale Bild empfangen wurde, zurück zu übertragen, wobei die erste Geräteklasseninformation die dem Bild zugeordnete Geräteklasse identifiziert. Eine Geräteklasse kann beispielsweise durch einen Gerätetyp, wie zum Beispiel WLAN-Router, Leuchtmittel oder Kaffeemaschine definiert sein, sowie alternativ oder zusätzlich durch detailliertere Informationen, wie zum Beispiel Gerätehersteller oder Modelltyp. Eine Geräteklasseninformation umfasst Informationen zur Identifikation der jeweiligen Geräteklasse, wie zum Beispiel Geräteart, Modell, Baureihe oder Hersteller. Prinzipiell kann eine Geräteklasseninformation jede Information umfassen, die geeignet ist, ein Gerät einer Geräteklasse zuzuordnen.

Typischerweise umfasst die Objekterkennungs-Einheit 310 wenigstens ein Software-Modul. Aufgrund des durch den Einsatz eines künstlichen neuronalen Netzwerks bedingten hohen Rechenleistungsaufwands kann die Objekterkennungs-Einheit 310 vorteilhaft auch ein speziell für diesen Zweck angepasstes Hardware-Modul umfassen, welches beispielsweise eine Vielzahl parallel arbeitender Prozessorkerne umfasst.

Der zentrale Server 300 ist ferner dazu ausgebildet, eine zweite Geräteklasseninformation von dem mobilen Kommunikationsendgerät 100 zu empfangen, zu welchem die erste Geräteklasseninformation übertragen wurde, und das künstliche neuronale Netzwerk in Abhängigkeit des in der Datenbank 320 gespeicherten digitalen Bildes und der empfangenen zweiten Geräteklasseninformation zu trainieren, wobei das Trainieren ein Anpassen der Parametrierung der Verarbeitungskette des künstlichen neuronalen Netzwerks umfasst.

Es wäre auch denkbar, alternativ oder zusätzlich zu einem neuronalen Netzwerk andere Technologien der künstlichen Intelligenz und/oder des maschinellen Lernens einzusetzen, wie zum Beispiel Entscheidungsbäume, Bayes'sche Modelle oder andere geeignete parametrierbare Algorithmen. Für diese anderen Technologien kann in analoger Weise ein Training bzw. eine Anpassung der Parametrierung vorgesehen sein.

Vorteilhaft kann serverseitig statt des in Fig. 2 dargestellten einzelnen Servers 300 ein Server-Cluster eingesetzt werden, welcher eine Vielzahl von Servern umfasst. Um eine Skalierung der serverseitig eingesetzten Software-Module auf verschiedene Hardware-ressourcen zu vereinfachen, kann vorteilhaft der Einsatz einer Containervirtualisierung vorgesehen sein, auch als Containering bezeichnet. Eine Containervirtualisierung ermöglicht das voneinander isolierte Betreiben mehrerer Instanzen eines Betriebssystems auf einem Hostsystem, wobei über Container Hardware-Ressourcen, Schnittstellen und Skripte verwaltet werden. Zur Containervirtualisierung kann beispielsweise die Software Docker eingesetzt werden. Um eine serverseitige Skalierbarkeit der zentral ausgeführten Umgebung bis hin zum Einsatz einer Vielzahl von Servern und gegebenenfalls mehreren Clouds zu ermöglichen, kann ferner vorteilhaft die Software Kubernetes zur Containerverwaltung eingesetzt werden.

Die Kommunikation zwischen dem mobilen Kommunikationsendgerät 100 und dem zentralen Server 300 kann vorteilhaft auf der Basis von REST (Representational State Transfer) erfolgen, wobei REST ein in der Regel auf dem HTTP-Protokoll basierendes Interaktions- oder Architekturmodell bezeichnet, mit welchem insbesondere Webservices beschrieben werden können. Ferner kann als Datenformat für die Kommunikation zwischen dem mobilen Kommunikationsendgerät 100 und dem zentralen Server 300 das Datenformat JSON (JavaScript Object Notation) verwendet werden, bei welchem es sich um ein kompaktes Datenformat handelt, das dem Datenaustausch zwischen Anwendungen dient, und welches durch die Standards RFC 8259, IETF, Dezember 2017, und ECMA-404, Ecma International, 2. Edition, Dezember 2017, spezifiziert wird.

Bei dem Verfahren zur Erkennung eines netzwerkfähigen Gerätes findet die Datenverarbeitung zur Objekterkennung auf dem von dem mobilen Kommunikationsendgerät 100 entfernten zentralen Server 300 statt, wobei die App 190 zu diesem Zweck vorteilhaft als Webanwendung ausgebildet sein kann. Bei Webanwendungen und mobilen Apps kann JSON vorteilhaft in Verbindung mit JavaScript, Ajax oder WebSockets zum Übertragen von Daten zwischen dem Client und dem Server, d.h. zwischen dem mobilen Kommunikationsendgerät 100 und dem zentralen Server 300, genutzt werden.

Zwischen dem mobilen Kommunikationsendgerät 100 und dem zentralen Server 300 werden mit Hilfe des Datenformats JSON vorteilhaft strukturierte Daten übertragen, welche vorteilhaft in diesem Format auf der Empfängerseite gespeichert werden können. Eine auf REST basierende Kommunikation, welche das Datenformat JSON verwendet, ermöglicht vorteilhaft eine zuverlässige Kommunikation großer Datenmengen zwischen Client und Server.

Die Datenspeicherung durch den zentralen Server erfolgt vorteilhaft in einer nicht-relationalen Datenbank, auch als NoSQL-Datenbank bezeichnet, d.h. die Datenbank 320 kann vorteilhaft als nicht-relationale Datenbank ausgebildet sein. Vorteilhaft kann beispielsweise die Open Source, NoSQL-Datenbank MongoDB verwendet werden, welche als dokumentenorientierte Datenbank besonders gut dazu geeignet ist, Sammlungen von JSON-ähnlichen Dokumenten zu verwalten. In einer solchen Datenbank können die zu speichernden Bilddaten und zugehörigen Daten, insbesondere Geräteklassen- und Zuordnungsinformationen, vorteilhaft auf natürlichere Weise modelliert werden. Die Daten können in komplexen Hierarchien verschachtelt werden, aber bleiben immer identifizierbar. Vorteilhaft können aufgrund der Skalierbarkeit einer nicht-relationalen Datenbank wie MongoDB auch große Datenansammlungen verwaltet werden, wie sie bei der Bereitstellung von Bilddaten durch eine Vielzahl von Nutzern auftreten. Auch plötzlich zu veränderte Datentypen oder Ergänzungen haben keinen großen Einfluss auf die Gesamtstruktur der Datenbank.

Die Datenbank ist insbesondere dazu ausgebildet, die Bilder der Netzwerkgeräte sortiert zu sammeln, in Abhängigkeit der jeweiligen Geräteklassenzuordnung. Auf diese Weise kann das künstliche neuronale Netzwerk regelmäßig trainiert werden, um die Erkennung der Geräte zu verbessern.

Der Aufbau des in den Figuren 1 und 2 dargestellten mobilen Kommunikationsendgeräts 100 ist in Fig. 3 beispielhaft schematisch dargestellt. Bezugnehmend auf Fig. 3 umfasst das beispielhaft dargestellte mobile Kommunikationsendgerät 100 eine Mobilfunknetz-Schnittstelle 180 zur Kommunikation über ein Mobilfunknetz, sowie eine WLAN-Schnittstelle 170 zur Kommunikation mit Geräten in einem drahtlosen lokalen Netzwerk, zum Beispiel dem in Fig. 1 dargestellten Heimnetzwerk 410. Ferner umfasst das mobile Kommunikationsendgerät 100 einen Datenspeicher 150, einen Programmspeicher 160, sowie einen als programmierbare Steuereinrichtung ausgebildeten Mikroprozessor 110, welcher dazu ausgebildet ist, in dem Programmspeicher 160 gespeicherte Softwareprogramme auszuführen.

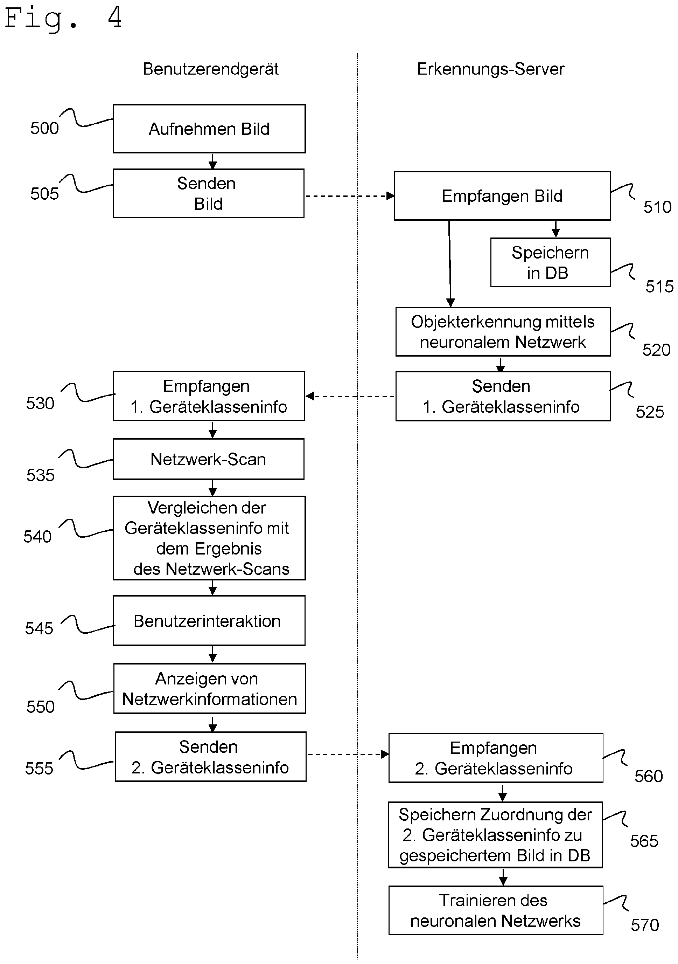

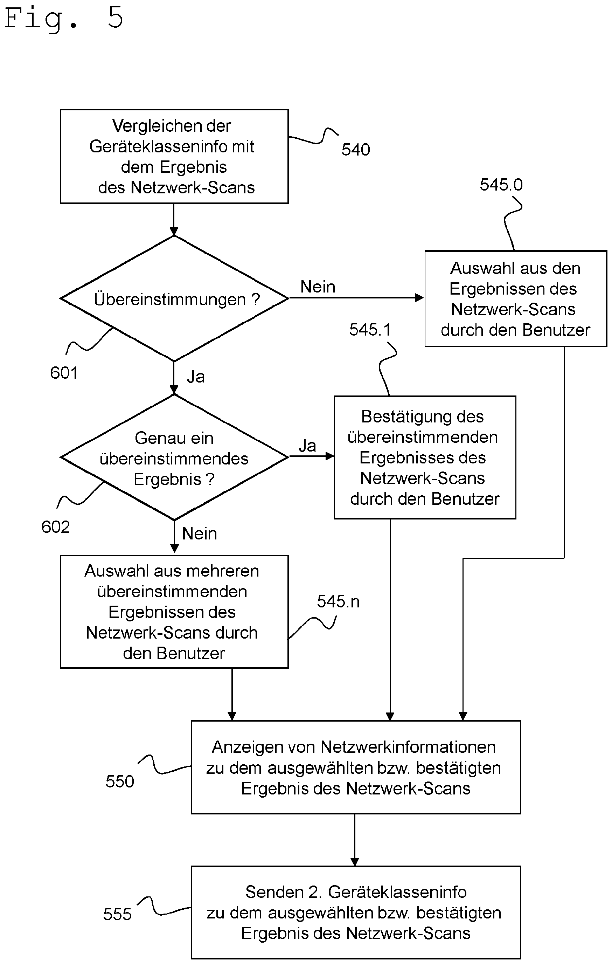

Insbesondere ist im Programmspeicher 160 des mobilen Kommunikationsendgeräts 100 eine Applikation, kurz App, gespeichert, zum Beispiel die in Fig. 2 dargestellte App 190, welche bei Ausführung durch den Mikroprozessor 110 dazu ausgebildet ist, die auf dem mobilen Kommunikationsendgerät 100 ablaufenden Schritte des nachfolgend im Zusammenhang mit den Figuren 4 und 5 beschriebenen Verfahrens auszuführen.

Das mobile Kommunikationsgerät 100 umfasst ferner eine Kamera 120, wobei die App 190 dazu ausgebildet ist, ein mit der Kamera 120 aufgenommenes digitales Bild zu speichern und mittels einer der Schnittstelen 170 oder 180 zu dem zentralen Server 300 zu übertragen. Ein Bildschirm 130 dient zur Anzeige des Kamerabildes, sowie zur Anzeige von Informationen zu einem netzwerkfähigen Gerät, welches bei Ausführen des nachfolgend beschriebenen Verfahrens erkannt wird. Zur Eingabe von gegebenenfalls erforderlichen Benutzereingaben umfasst das mobile Kommunikationsendgerät ferner eine Eingabeeinrichtung 140 für Benutzereingaben. Die Eingabeeinrichtung 140 kann beispielsweise in Form eines Touchscreens ausgebildet sein, selbstverständlich kann aber auch jegliche andere geeignete, an sich bekannte Eingabeeinrichtung vorgesehen sein.

In Fig. 4 ist eine beispielhafte Ausführungsform eines Verfahrens zur Erkennung eines netzwerkfähigen Gerätes in einem Heimnetzwerk schematisch dargestellt, wobei im dargestellten Beispiel als mobiles Kommunikationsendgerät ein Benutzerendgerät und als zentraler Server ein Erkennungs-Server an dem Verfahren beteiligt sind. Das Benutzerendgerät kann beispielsweise ein Smartphone eines Benutzers sein, der mit Hilfe einer auf dem Smartphone installierten Applikation, welche von seinem Internet Service Provider bereitgestellt wird, Informationen zu netzwerkfähigen Geräten in seinem Heimnetzwerk erhalten möchte. Insbesondere kann das Benutzerendgerät dem oben beschriebenen mobilen Kommunikationsendgerät 100 entsprechen. Der Erkennungs-Server kann vorteilhaft im Backbone-Netzwerk des Internet Service Providers angeordnet sein und kann insbesondere als der oben beschriebene zentrale Server 300 ausgebildet sein. Eine Kommunikation zwischen dem Benutzerendgerät und dem Erkennungs-Server kann über das Internet erfolgen, wobei das Benutzerendgerät beispielsweise über die WLAN-Schnittstelle 170 mit einem Internet-Router kommuniziert, welcher eine Verbindung zum Internet bereitstellt, und wobei der Erkennungs-Server ebenfalls mit dem Internet verbunden ist. Alternativ kann eine Kommunikation zwischen dem Benutzerendgerät und dem Erkennungs-Server zumindest teilweise über ein Mobilfunknetz erfolgen, wobei zu diesem Zweck die Mobilfunkschnittstelle 180 genutzt wird. So kann beispielsweise das Benutzerendgerät direkt über das Mobilfunknetz mit dem Erkennungs-Server kommunizieren oder das Benutzerendgerät kann über das Mobilfunknetz eine Verbindung zum Internet herstellen.

Zur Erkennung eines netzwerkfähigen Gerätes in dem Heimnetzwerk des Benutzers sieht das Verfahren zunächst vor, dass der Benutzer in Schritt 500 mit einer Kamera des Benutzerendgerätes ein digitales Bild eines Gerätes aufnimmt, wobei der Benutzer von dem Gerät annimmt, dass dieses ein netzwerkfähiges Gerät ist, welches in sein Heimnetzwerk eingebunden werden kann oder bereits eingebunden ist. Dieses aufgenommene digitale Bild wird dann in Schritt 505 zu dem Erkennungs-Server gesendet, welcher das digitale Bild in Schritt 510 empfängt. Das Senden des Bildes wird vorzugsweise automatisch durch die Applikation 190 bewirkt.

Zu diesem Zweck kann die Applikation 190 vorteilhaft dazu ausgebildet sein, unter Ansprechen auf eine Benutzereingabe über die Eingabeeinrichtung 140 die Aufnahme eines digitalen Bildes mittels der Kamera 120 und die Übertragung des aufgenommenen digitalen Bildes an den zentralen Server 300 zu bewirken. Alternativ kann, gesteuert durch die App 190, das Aufnehmen eines digitalen Bildes und dessen Übertragung zum zentralen Server 300 automatisch zu vorgegebenen Zeitpunkten, insbesondere zyklisch, erfolgen.

Die App 190 kann auch dazu ausgebildet sein, das Benutzerendgerät derart zu steuern, dass von der Kamera 120 des Benutzerendgerätes automatisch zu vorgegebenen Zeitpunkten, insbesondere zyklisch, ein digitales Bild aufgenommen, gespeichert und einer Bildanalyse unterzogen wird, wobei die Bildanalyse dazu dient zu erkennen, ob in dem Bild ein Objekt dargestellt wird, das ein netzwerkfähiges Gerät sein könnte. Mit anderen Worten dient die auf dem Benutzerendgerät in dieser Ausführungsform ausgeführte Bildanalyse lediglich einer Vorab-Erkennung, ob im Bild überhaupt Objekte zu finden sind, wobei diese Vorab-Erkennung vorteilhaft gegenüber der auf dem Erkennungs-Server ausgeführten Objekterkennung eine geringere Rechenkapazität und weniger Speicher erfordert. Dies kann beispielsweise mittels einer Kantendetektion oder einer Segmentierung des Bildes erfolgen. In dieser Ausführungsform ist dann vorteilhaft vorgesehen, ein aufgenommenes digitales Bild nur dann zur weiteren Verarbeitung zum Erkennungs-Server zu übertragen, wenn die auf dem Benutzerendgerät vorab ausgeführte Bildanalyse ergibt, dass das Bild überhaupt zu erkennende Objekte enthält.

Es kann ferner vorteilhaft vorgesehen sein, dass der Nutzer über eine Benutzereingabe eine Zusatzinformation zu dem aufgenommenen Bild bereitstellt, welche zusammen mit dem aufgenommenen digitalen Bild zu dem Erkennungs-Server gesendet wird, wobei dies in Fig. 4 nicht dargestellt ist. Diese Zusatzinformationen können beispielsweise eine das aufgenommene Bild betreffende individuelle Information, wie zum Beispiel die Art der Beleuchtung, umfassen, oder aber auch eine Information, die das individuelle netzwerkfähige Gerät betrifft, von dem ein digitales Bild aufgenommen wurde, wie zum Beispiel die Information, dass das Aussehen des Gerätes aufgrund einer individuellen Markierung, zum Beispiel in Form eines Aufklebers, von dem normalen Aussehen eines Gerätes der jeweiligen Geräteklasse abweicht. Um die Erkennung bei optischen Sonderfällen, zum Beispiel aufgrund der Beleuchtung oder eines Aufklebers, zu verbessern, kann der Nutzer beispielsweise auch eine Gerätekategorie, wie beispielsweise Laptop, Router oder Smart Device, als Zusatzinformation vorgeben. Die vom Nutzer angegebenen Zusatzinformationen dienen insbesondere dazu, eine Erkennung durch das künstliche neuronale Netzwerk zu gewährleisten bzw. zu verbessern.

Das empfangene digitale Bild wird von dem Erkennungs-Server in Schritt 515 in einer Datenbank gespeichert, wobei diese Datenbank im Erkennungs-Server oder auch separat angeordnet sein kann. Denkbar ist auch die Speicherung in einem verteilten Datenbanksystem oder einer sogenannten Cloud. In Schritt 520 führt der Erkennungs-Server auf Grundlage des empfangenen digitalen Bildes automatisch eine Objekterkennung mittels eines künstlichen neuronalen Netzwerks aus. Zu diesem Zweck wird das empfangene digitale Bild durch den Erkennungs-Server mittels des künstlichen neuronalen Netzwerks verarbeitet, wobei das empfangene Bild oder aus dem Bild abgeleitete Daten dem künstlichen neuronalen Netzwerk zugeführt werden und das künstliche neuronale Netzwerk daraus in Abhängigkeit einer parametrierbaren Verarbeitungskette eine Ausgangsgröße ermittelt, und wobei der Erkennungs-Server in Abhängigkeit der von dem künstlichen neuronalen Netzwerk ermittelten Ausgangsgröße das empfangene Bild einer ersten Geräteklasse zuordnet. Vorteilhaft kann in Abhängigkeit der von dem künstlichen neuronalen Netzwerk ermittelten Ausgangsgröße auch ein Wahrscheinlichkeitswert zwischen 0 % und 100 % ermittelt werden, welcher die Wahrscheinlichkeit angibt, dass dem empfangenen Bild die richtige erste Geräteklasse zugeordnet wurde.

Sofern mit dem digitalen Bild Zusatzinformationen übertragen wurden, können diese ebenfalls in der Datenbank gespeichert werden. Zur Verbesserung der Erkennung können die Zusatzinformationen zusammen mit dem digitalen Bild dem künstlichen neuronalen Netzwerk zugeführt werden und/oder bei der Zuordnung der ersten Geräteklasse berücksichtigt werden. Zum Beispiel könnte eine Information zur Beleuchtung als zusätzliche Eingangsgröße vom künstlichen neuronalen Netzwerk mitverarbeitet werden, oder es könnte bei einer vom Nutzer vorgegebenen Gerätekategorie das empfangene Bild nur einer solchen ersten Geräteklasse zugeordnet werden, die in die vorgegebene Gerätekategorie fällt.

Das künstliche neuronale Netzwerk ist vorteilhaft darauf trainiert, netzwerkfähige Geräte, die in einem Heimnetzwerk einsetzbar sind, auf der Grundlage eines digitalen Bildes des Gerätes zu erkennen. So können beispielsweise für vorgegebene Geräteklassen jeweils je Geräteklasse eine Mehrzahl digitaler Bilder als Trainingsdaten bereitgestellt werden, wobei jedes digitale Bild ein Gerät der jeweiligen Geräteklasse zeigt. Vorteilhaft werden für das Training digitale Bilder verwendet, die unterschiedliche Ansichten des jeweiligen Gerätes zeigen, um eine hohe Erkennungswahrscheinlichkeit zu gewährleisten.

Eine Information über die erkannte erste Geräteklasse wird in Schritt 525 vom Erkennungs-Server an das Benutzergerät zurückgesandt, welches diese Information in Schritt 530 empfängt. Die Information kann auch einen Wahrscheinlichkeitswert umfassen, welcher die Wahrscheinlichkeit angibt, dass die erste Geräteklasse korrekt erkannt wurde.

Im dargestellten Ausführungsbeispiel führt das Benutzerendgerät in Schritt 535 einen Netzwerk-Scan aus. Dies kann jedoch auch bereits zu einem früheren Zeitpunkt erfolgen bzw. regelmäßig in zyklischen zeitlichen Abständen. Es kann beispielsweise immer dann, wenn das Benutzerendgerät eine erste Geräteklasseninformation vom Erkennungs-Server empfängt, durch das Benutzerendgerät geprüft werden, ob aktuelle Ergebnisse eines Netzwerk-Scans vorliegen, und nur wenn dies nicht der Fall ist, wird von dem Benutzerendgerät ein neuer Netzwerk-Scan durchgeführt, wobei aktuelle Ergebnisse beispielsweise dann vorliegen, wenn der letzte durchgeführte Netzwerk-Scan nicht länger als eine vorgegebene Zeitdauer zurückliegt.

Zum Ausführen eines Netzwerk-Scans sendet das Benutzerendgerät 100 vorzugsweise eine Nachricht mittels der WLAN-Schnittstelle 170, welche bewirkt, dass die netzwerkfähigen Geräte, die diese Nachricht empfangen, ihrerseits eine Nachricht senden, welche wenigstens eine Identifikationsinformation umfasst, mit der das jeweils sendende netzwerkfähige Gerät identifiziert wird. Vorzugsweise ist die vom Benutzerendgerät 100 gesendete Nachricht eine Multicast-Nachricht gemäß einem vorgegebenen Kommunikationsprotokoll.

Der Netzwerk-Scan kann beispielsweise unter Verwendung von Universal Plug and Play (UPnP) erfolgen, wobei UPnP einen Standard zur herstellerübergreifenden Ansteuerung von Geräten über ein IP-basiertes Netzwerk bezeichnet, mit oder ohne zentrale Kontrolle durch ein Residential Gateway wie zum Beispiel einen WLAN-Router. UPnP basiert auf standardisierten Netzwerkprotokollen und Datenformaten, wobei in heutigen netzwerkfähigen, für den Einsatz in einem Heimnetzwerk vorgesehenen Geräten der UPnP-Protokollstapel typischerweise installiert ist. Die UPnP-Geräte-Architektur wird beispielsweise in dem Dokument "UPnP Device Architecture 2.0", UPnP Forum, 2015, beschrieben.

Bei Verwendung von UPnP kann das Benutzerendgerät 100 beispielsweise eine sogenannte Discovery-Nachricht basierend auf SSDP (Simple Service Discovery Protocol) versenden, um nach Geräten im Netzwerk zu suchen, wobei die Geräte, welche die Discovery-Nachricht empfangen und den in der Discovery-Nachricht gegebenenfalls angegebenen Suchkriterien entsprechen, daraufhin eine entsprechende Antwortnachricht senden.

Das Ergebnis des Netzwerk-Scans wird vorzugsweise im Benutzerendgerät 100 in Form einer Liste erkannter netzwerkfähiger Geräte mit jeweils zugeordneten Geräteinformationen gespeichert, wobei die Geräteinformationen wenigstens eine Identifikationsinformation, sowie vorzugsweise weitere Informationen, umfassen, wobei die Identifikationsinformation die Geräteklasse des erkannten Gerätes identifiziert. Die weiteren Informationen können beispielsweise die Information umfassen, ob das erkannte Gerät im Heimnetzwerk angemeldet ist, eine IP-Adresse und/oder eine MAC-Adresse des erkannten Gerätes, vom erkannten Gerät angebotene Services, oder auch Informationen zur Installation des erkannten Gerätes durch einen Benutzer, zum Beispiel in Form einer Datei mit Installationsanweisungen. Die Liste kann beispielsweise in Form einer indizierten Menge von Datenobjekten gespeichert werden.

In Schritt 540 wird die empfangene erste Geräteklasseninformation mit dem Ergebnis des Netzwerk-Scans, d.h. mit der Liste erkannter netzwerkfähiger Geräte, verglichen.

Vorteilhaft umfasst die erste Geräteklasseninformation eine Identifikationsinformation, die mit einer Information übereinstimmt, welche von einem netzwerkfähigen Gerät gesendet wird, wenn dieses eine Aufforderung zur Identifikation von einem, einen Netzwerk-Scan ausführenden Gerät empfängt.

Im dargestellten Ausführungsbeispiel erfolgt in Schritt 545 eine Benutzerinteraktion, wobei durch die Benutzerinteraktion eines der erkannten Geräte ausgewählt wird und in Schritt 550 zugehörige Netzwerkinformationen, d.h. insbesondere von dem ausgewählten Gerät während des Netzwerkscans empfangene Informationen, auf dem Bildschirm 130 angezeigt werden. Die Auswahl eines durch den Netzwerkscan erkannten Gerätes kann auch automatisch durch das Benutzerendgerät und ohne weitere Benutzerinteraktion erfolgen, wobei in diesem Fall der Schritt 545 entfällt.

Wie in Fig. 1 dargestellt, können die angezeigten Informationen beispielsweise eine Bezeichnung der Geräteklasse des erkannten Gerätes, eine Bezeichnung des WLAN-Netzwerkes, in dem das Gerät angemeldet ist, sowie weitere Informationen umfassen. In dem in Fig. 1 dargestellten Beispiel wird als Bezeichnung der Geräteklasse "Internet-Lautsprecher" angezeigt. Die dargestellte Information "WLAN SSID" ist ein Platzhalter für den Namen, d.h. für den SSID (Service Set Identifier), des jeweiligen WLAN-Netzwerkes.

In dem in Fig. 1 dargestellten Beispiel wird noch die Information angezeigt, dass die Empfangsqualität des erkannten Gerätes schlecht ist, sowie die zusätzliche Information, dass die Empfangsqualität durch Ändern des Standortes des Gerätes verbessert werden kann.

Je nach Ergebnis des in Schritt 540 ausgeführten Vergleiches sind auch unterschiedliche Varianten der Benutzerinteraktion möglich. Dies ist in Fig. 5 näher dargestellt.

Wie in Fig. 5 dargestellt, wird das Ergebnis des in Schritt 540 ausgeführten Vergleiches vorzugsweise zunächst in Schritt 601 daraufhin geprüft, ob Übereinstimmungen zwischen der ersten Geräteklasseninformation und dem Ergebnis des Netzwerkscans vorliegen. Zu diesem Zweck wird in Schritt 540 vorzugsweise jedes im Netzwerkscan erkannte netzwerkfähige Gerät jeweils mit der ersten Geräteklasseninformation verglichen. Es können vorteilhaft im Benutzerendgerät Vergleichsregeln hinterlegt sein, in Abhängigkeit derer geprüft wird, ob ein im Netzwerkscan erkanntes netzwerkfähiges Gerät mit der ersten Geräteklasseninformation übereinstimmt. Eine Übereinstimmung kann beispielsweise dann vorliegen, wenn die vom erkannten netzwerkfähigen Gerät während des Netzwerkscans zum Benutzerendgerät übertragenen Daten und die erste Geräteklasseninformation wenigstens eine übereinstimmende Information, insbesondere eine übereinstimmende Identifikationsinformation umfassen.

Sowohl die erste Geräteklasseninformation als auch die von erkannten netzwerkfähigen Geräten gesendeten Daten können hierarchisch strukturierte Informationen umfassen, durch welche die jeweilige Geräteklasse unterschiedlich genau identifiziert wird. Ein Beispiel solcher hierarchisch strukturierten Informationen sind Geräteart, Hersteller, Baureihe, Modelltyp, Modellvariante, wobei diese das Gerät jeweils mit steigender Genauigkeit identifizieren. Durch die hinterlegten Vergleichsregeln kann die für die Erkennung einer Übereinstimmung erforderliche Genauigkeit festgelegt werden. Die hinterlegten Vergleichsregeln können auch die Erkennungswahrscheinlichkeit berücksichtigen, d.h. einen optional vom Erkennungs-Server übertragenen Wahrscheinlichkeitswert, welcher die Wahrscheinlichkeit angibt, dass die erste Geräteklasse vom Erkennungs-Server korrekt erkannt wurde.

Wird in Schritt 601 festgestellt, dass keine Übereinstimmungen vorliegen, so kann dem Benutzer des Benutzerendgerätes in Schritt 545.0 die Liste der im Netzwerkscan erkannten netzwerkfähigen Geräte ganz oder teilweise angezeigt werden mit der Aufforderung, eines der Geräte auszuwählen.

Wird in Schritt 601 festgestellt, dass Übereinstimmungen vorliegen, wird in Schritt 602 geprüft, ob es genau eine Übereinstimmung gibt. Ist dies der Fall wird der Benutzer in Schritt 545.1 aufgefordert, die erkannte Übereinstimmung zu bestätigen. Wird in Schritt 602 festgestellt, dass mehr als eine Übereinstimmung vorliegt, so wird der Benutzer in Schritt 545.n aufgefordert, aus den mehreren, im Netzwerkscan erkannten netzwerkfähigen Geräten, die mit der ersten Geräteklasseninformation übereinstimmen, ein Gerät auszuwählen.

In Schritt 550 werden zu dem vom Benutzer ausgewählten oder bestätigten Gerät zugehörige Netzwerkinformationen, d.h. von dem Gerät während des Netzwerkscans empfangene Informationen, auf dem Bildschirm 130 angezeigt.

Der Schritt 545.0 kann auch umfassen, dass der Benutzer angibt, dass keines der mittels Netzwerkscan erkannten Geräte mit der empfangenen ersten Geräteklasseninformation übereinstimmt, woraufhin in Schritt 550 als Netzwerkinformation die Information angezeigt wird, dass das Gerät nicht im Netzwerk angemeldet ist, gegebenenfalls zusammen mit Informationen, die in der empfangenen ersten Geräteklasseninformation enthalten sind.

Ferner kann insbesondere für den Fall, dass genau ein übereinstimmendes Ergebnis festgestellt wird, auf eine Benutzerinteraktion, d.h. insbesondere auf den Schritt 545.1, verzichtet werden, und die Netzwerkinformationen automatisch angezeigt werden.

In Schritt 555 wird eine zweite Geräteklasseninformation, welche das durch den Benutzer oder automatisch ausgewählte bzw. bestätigte Gerät identifiziert oder eine Information umfasst, dass kein übereinstimmendes Gerät gefunden wurde, vom Benutzerendgerät zum Erkennungs-Server gesendet.

Wieder bezugnehmend auf Fig. 4, wird die zweite Geräteklasseninformation vom Erkennungs-Server in Schritt 560 empfangen und in Schritt 565 in der Datenbank 320 gespeichert, wobei eine Zuordnung des in Schritt 515 gespeicherten Bildes zu der empfangenen zweiten Geräteklasseninformation in der Datenbank 320 gespeichert wird, beispielsweise in Form einer Verknüpfungsinformation. Es sei angemerkt, dass die zweite Geräteklasseninformation nur dann in der Datenbank 320 gespeichert wird, wenn diese dort nicht bereits gespeichert ist. Ist die zweite Geräteklasseninformation bereits in der Datenbank gespeichert, so wird nur eine Verknüpfungsinformation in der Datenbank gespeichert, welche das in Schritt 515 in der Datenbank 320 gespeicherte digitale Bild mit der in der Datenbank 320 gespeicherten zweiten Geräteklasseninformation verknüpft.

In Schritt 570 wird das künstliche neuronale Netzwerk in Abhängigkeit des in der Datenbank 320 gespeicherten digitalen Bildes und der empfangenen zweiten Geräteklasseninformation trainiert, wobei das Trainieren ein Anpassen der Parametrierung der Verarbeitungskette des künstlichen neuronalen Netzwerks umfasst.

Besonders vorteilhaft werden auf diese Weise von einer Vielzahl von Benutzern Bilder zum Erkennungs-Server übertragen und durch das beschriebene Verfahren einer zweiten Geräteklasseninformation zugeordnet, so dass das künstliche neuronale Netzwerk für eine zu erkennende Geräteklasse kontinuierlich mit neuen Trainingsdaten in Form von Bildern dieser Geräteklasse versorgt wird.

Dies ist besonders vorteilhaft, da in der Regel sehr viele Trainingsbilder benötigt werden, um ein künstliches neuronales Netzwerk zu trainieren, d.h. um die Parameter für die künstlichen Neuronen anzupassen.

Die Erfindung kann als künstliches neuronales Netzwerk vorteilhaft ein sogenanntes faltendes neuronales Netzwerk (Convolutional Neural Network, CNN) einsetzen, da ein solches Netzwerk für die Verarbeitung von Bilddaten zur Objekterkennung besonders gut geeignet ist.

Vorteilhaft kann ferner ein vortrainiertes künstliches neuronales Netzwerk eingesetzt werden, beispielsweise das Open Source KNN Inception-v3 der Firma Google, welches dann durch weiteres Training mit Hilfe von Trainingsbildern an den erfindungsgemäßen Einsatzzweck der Erkennung von Geräteklassen angepasst wird. In einer vorteilhaften Ausfiihrungsform der Erfindung kann bei Einsatz eines vortrainierten KNN ferner vorgesehen sein, dass bei dem weiteren Training nicht alle, sondern nur ausgewählte Schichten des KNN angepasst werden. Beispielsweise kann bei Einsatz des vortrainierten Netzwerks Inception-v3 durch das Training nur die oberste Schicht geändert, d.h. die Parameter der Neuronen der obersten Schicht angepasst und die Architektur des KNN bestehen gelassen werden. Dadurch bleiben die einzelnen Verknüpfungen der künstlichen Neuronen bestehen, dennoch verändert sich die Erkennung durch das Einspeisen anderer Trainings- bzw. Erkennungsbilder. Die oberste Schicht des KNN bezeichnet insbesondere die erste Schicht nach der Eingabeschicht des KNN

Da das Übertragen der zweiten Geräteklasseninformation zum Erkennungs-Server insbesondere dazu dient, das künstliche neuronale Netzwerk zu trainieren, kann für den Fall, dass kein übereinstimmendes Gerät gefunden wurde, auf das Senden der zweiten Geräteklasseninformation verzichtet werden, so dass in diesem Fall der Schritt 555 und die nachfolgenden in Fig. 4 dargestellten Schritte nicht ausgeführt werden.

Es kann aber auch vorgesehen sein, dass für den Fall, dass kein übereinstimmendes Gerät gefunden wurde, der Erkennungs-Server in Antwort auf den Empfang der zweiten Geräteklasseninformation, d.h. in diesem Fall in Antwort auf die Information, dass kein übereinstimmendes Gerät gefunden wurde, statt der Ausführung der Schritte 565 und 570 zusätzliche Informationen zu der ersten Geräteklasseninformation zu dem Benutzerendgerät überträgt.

Diese zusätzlichen Informationen, die vorzugsweise dann übertragen werden, wenn kein übereinstimmendes Gerät gefunden wurde, weil das Gerät nicht im Heimnetzwerk angemeldet ist, können beispielsweise Installationsanweisungen umfassen oder einen Internet-Link zu einem Gerätehersteller, um den Benutzer beim Einrichten seines Gerätes zu unterstützen.

Im Folgenden wird nochmals jeweils der Ablauf für die Erkennung von bekannten Geräten und für die Erkennung von unbekannten Geräten skizziert.

Bei der Erkennung von bereits bekannten Geräten wird das aufgenommene digitale Bild vorzugsweise mit verschiedenen Optimierern angepasst, beispielsweise hinsichtlich der Skalierung, des Farbraums und gegebenenfalls weiterer Bildparameter. Das angepasste digitale Bild wird dann in das trainierte künstliche neuronale Netzwerk eingespeist, d.h. dem trainierten künstlichen neuronalen Netzwerk zugeführt. Das künstliche neuronale Netzwerk liefert eine Ausgabe, in deren Abhängigkeit dem digitalen Bild eine Geräteklasse zugeordnet werden kann, sowie eine Wahrscheinlichkeit zwischen 0 % und 100 % dafür, dass die Zuordnung der Geräteklasse zu dem digitalen Bild, d.h. die Klassifizierung des digitalen Bildes, zutreffend ist. Beispielsweise kann die Ausgabeschicht des künstlichen neuronalen Netzwerks für jede zuordenbare Geräteklasse ein künstliches Neuron umfassen, das jeweils einen Wert ausgibt, welcher einer Wahrscheinlichkeit entspricht, dass das digitale Bild die jeweilige Geräteklasse zeigt, wobei dem digitalen Bild die Geräteklasse desjenigen künstlichen Neurons zugeordnet wird, welches den größten Wert ausgibt.

Das Ergebnis des künstlichen neuronalen Netzwerks wird zusätzlich bestärkt, indem eine Übereinstimmung der zugeordneten Geräteklasse mit einem durch einen im Heimnetzwerk ausgeführten Netzwerkscan erkannten Gerät festgestellt wird und diese Information für das weitere Training des künstlichen neuronalen Netzwerks verwendet wird.

Bei der Erkennung von unbekannten Geräten ist der Ablauf zunächst identisch, d.h. das aufgenommene digitale Bild wird vorzugsweise mit verschiedenen Optimierern angepasst, beispielsweise hinsichtlich der Skalierung, des Farbraums und gegebenenfalls weiterer Bildparameter. Das angepasste digitale Bild wird dann in das trainierte künstliche neuronale Netzwerk eingespeist, d.h. dem trainierten künstlichen neuronalen Netzwerk zugeführt. Das künstliche neuronale Netzwerk liefert eine Ausgabe, in deren Abhängigkeit dem digitalen Bild eine Geräteklasse zugeordnet werden kann, sowie eine Wahrscheinlichkeit zwischen 0 % und 100 % dafür, dass die Zuordnung der Geräteklasse zu dem digitalen Bild, d.h. die Klassifizierung des digitalen Bildes, zutreffend ist.

In dem Fall, dass das Gerät nicht bekannt ist und daher die entsprechende Geräteklasse im künstlichen neuronalen Netzwerk nicht als zuordenbare Geräteklasse registriert ist, wird die App zuerst eine bekannte Geräteklasse als Ergebnis liefern, gegebenenfalls mit der Information, dass die Wahrscheinlichkeit einer korrekten bzw. zutreffenden Zuordnung niedrig ist bzw. unterhalb eines vorgegebenen Schwellwertes liegt. Es kann auch vorteilhaft vorgesehen sein, dass dem Benutzer eine Liste der mit Hilfe eines Netzwerkscans gefundenen, teilweise noch unbekannten Geräte angezeigt wird, beispielsweise in Reaktion darauf, dass die Wahrscheinlichkeit einer korrekten bzw. zutreffenden Zuordnung niedrig ist bzw. unterhalb eines vorgegebenen Schwellwertes liegt. Der Benutzer muss daraufhin clientseitig aktiv werden und manuell das richtige Gerät aus der angezeigten Liste auswählen. Dadurch wird das aufgenommene Bild mit dem vom Benutzer zugeordneten Label, d.h. der vom Benutzer zugeordneten Geräteinformation, in der Datenbank gespeichert, wobei insbesondere durch die Auswahl eines Gerätes aus der Liste mittels Netzwerkscan erkannter Geräte eine dem ausgewählten Gerät zugeordnete Geräteinformation ausgewählt wird, welche wenigstens eine Identifikationsinformation umfasst, welche die Geräteklasse des ausgewählten Gerätes identifiziert. Das aufgenommene Bild mit der durch den Benutzer zugeordneten Geräteklasse kann für zukünftige Trainings des künstlichen neuronalen Netzwerks genutzt werden, wodurch das künstliche neuronale Netzwerk weitere Geräteklassen erlernen kann.

Durch das Labeln der Bilddaten mit Netzwerkinformationen wie Gerätename und -typ entsteht so eine Kombinatorik, über die durch zunächst manuelle Zuordnung ab einem gewissen Datenschwellwert eine automatisierte Kombinatorik durch maschinelles Lernen entsteht, welche es ermöglicht, noch unbekannte Geräte per Bild und Netzwerkinformationen erfolgreich zuzuordnen.

Die erfindungsgemäße Technologie sieht somit für den Fall, dass ein netzwerkfähiges Gerät so neu oder antik ist, dass es nicht erkannt werden könnte, vorteilhaft vor, dass ein Nutzer oder auch der Hersteller des Gerätes eigenständig den anderen Nutzern dieser Technologie die für eine Erkennung erforderlichen Informationen zur Verfügung stellt, so dass im Idealfall nach kürzester Zeit auch neue Netzwerkobjekte von dieser Technologie unterstützt werden sollte.

Einige beispielhafte Aspekte der Erfindung werden nachfolgend in Verbindung mit den Figuren aufgezeigt.

Gemäß einem Aspekt der Erfindung wird ein Verfahren zur Verfügung gestellt, welches der Erkennung eines netzwerkfähigen Gerätes, wie beispielsweise eines der Geräte 201 bis 206, in einem Heimnetzwerk 410 dient. Das Verfahren sieht vor, ein digitales Bild eines zu erkennenden netzwerkfähigen Gerätes, wie beispielsweise eines der Geräte 201 bis 206, mit einem mobilen Kommunikationsendgerät 100 aufzunehmen, das aufgenommene digitale Bild von dem mobilen Kommunikationsendgerät 100 zu einem zentralen Server 300 zu übertragen, das empfangene Bild durch den zentralen Server 300 in einer Datenbank 320 zu speichern, das empfangene Bild durch den zentralen Server 300 mittels eines künstlichen neuronalen Netzwerks zu verarbeiten, wobei das empfangene Bild oder aus dem Bild abgeleitete Daten dem künstlichen neuronalen Netzwerk zugeführt werden und das künstliche neuronale Netzwerk daraus in Abhängigkeit einer parametrierbaren Verarbeitungskette eine Ausgangsgröße ermittelt, das empfangene Bild durch den zentralen Server 300 in Abhängigkeit der von dem künstlichen neuronalen Netzwerk ermittelten Ausgangsgröße zu einer Geräteklasse zuzuordnen eine erste Geräteklasseninformation in Abhängigkeit der zugeordneten Geräteklasse von dem zentralen Server 300 zu dem mobilen Kommunikationsendgerät 100 zu übertragen, netzwerkfähige Geräte, wie beispielsweise die Geräte 201 bis 206, , mit denen das mobile Kommunikationsendgerät (100) über ein drahtloses Netzwerk kommunizieren kann, zu entdecken, Statusinformationen von den jeweiligen entdeckten netzwerkfähigen Geräten zu dem mobilen Kommunikationsendgerät 100 zu übertragen, wenigstens eines der entdeckten netzwerkfähigen Geräte in Abhängigkeit der übertragenen ersten Geräteklasseninformation auszuwählen oder durch den Benutzer des mobilen Kommunikationsendgerätes eine zweite Geräteklasseninformation anzugeben, Netzwerkinformationen auf einem Bildschirm 120 des mobilen Kommunikationsendgerätes 100 anzuzeigen, eine dem ausgewählten netzwerkfähigen Gerät zugeordnete zweite Geräteklasseninformation und/oder die durch den Benutzer angegebene zweite Geräteklasseninformation von dem mobilen Kommunikationsendgerät 100 zu dem zentralen Server 300 zu übertragen, und das künstliche neuronale Netzwerk in Abhängigkeit des in der Datenbank gespeicherten Bildes und der übertragenen zweiten Geräteklasseninformation zu trainieren.

Vorteilhaft umfasst das Auswählen des wenigstens einen Gerätes ein Vergleichen der von dem zentralen Server 300 zu dem mobilen Kommunikationsendgerät 100 übertragenen ersten Geräteklasseninformation und der von den entdeckten netzwerkfähigen Geräten empfangenen Statusinformationen. In einer bevorzugten Ausführungsform des Verfahrens kann das Auswählen des wenigstens einen Gerätes ferner eine Benutzereingabe an dem mobilen Kommunikationsendgerät 100 umfassen.

Das Anzeigen von Netzwerkinformationen umfasst vorzugsweise ein Einblenden von Informationen in ein auf dem Bildschirm 120 des mobilen Kommunikationsendgerätes 100 angezeigtes Bild. Insbesondere werden Netzwerkinformationen in ein Bild eingeblendet, welches das netzwerkfähige Gerät zeigt, zu dem die Netzwerkinformationen gehören, wobei das Bild insbesondere ein Live-Bild ist, um dem Nutzer auf diese Weise die Netzwerkinformationen in Form einer Augmented Reality anzuzeigen.

Das Verfahren umfasst vorteilhaft ferner ein Speichern der zweiten Geräteklasseninformation in der Datenbank 320, sofern diese nicht bereits in der Datenbank 320 gespeichert ist, und ein Speichern einer Verknüpfungsinformation in der Datenbank 320, welche das in der Datenbank 320 gespeicherte digitale Bild mit der in der Datenbank gespeicherten zweiten Geräteklasseninformation verknüpft.

Gemäß einem weiteren Aspekt der Erfindung wird ein mobiles Kommunikationsendgerät 100 zur Verfügung gestellt, welches eine Kamera 120, einen Bildschirm 130, eine Eingabeeinrichtung 140 für Benutzereingaben, eine Speichereinrichtung 160, eine Steuereinheit 110 zum Ausführen von in der Speichereinrichtung 160 gespeicherten Anweisungen, und eine Kommunikationsschnittstelle 170 zur Kommunikation in einem drahtlosen Netzwerk umfasst.

Das mobile Kommunikationsendgerät 100 ist dazu ausgebildet, netzwerkfähige Geräte, wie beispielsweise die Geräte 201 bis 206, zu entdecken, mit denen das mobile Kommunikationsendgerät 100 über das drahtlose Netzwerk kommunizieren kann, und Statusinformationen von den jeweiligen entdeckten netzwerkfähigen Geräten zu empfangen, ein mit der Kamera 120 aufgenommenes digitales Bild zu einem zentralen Server 300 zu übertragen, eine erste Geräteklasseninformation von dem zentralen Server 300 zu empfangen, und unter Ansprechen auf eine empfangene erste Geräteklasseninformation wenigstens eines der entdeckten netzwerkfähigen Geräte in Abhängigkeit der empfangenen ersten Geräteklasseninformation auszuwählen und/oder den Benutzer des mobilen Kommunikationsendgerätes 100 zur Eingabe einer zweiten Geräteklasseninformation aufzufordern, Netzwerkinformationen auf dem Bildschirm 130 anzuzeigen, und eine dem ausgewählten netzwerkfähigen Gerät zugeordnete zweite Geräteklasseninformation und/oder die durch den Benutzer angegebene zweite Geräteklasseninformation zu dem zentralen Server 300 zu übertragen.

Das mobile Kommunikationsendgerät 100 ist vorteilhaft dazu ausgebildet, eine von dem zentralen Server 300 empfangene erste Geräteklasseninformation mit von entdeckten netzwerkfähigen Geräten empfangenen Statusinformationen zu vergleichen und in Abhängigkeit von dem Vergleichsergebnis wenigstens eines der entdeckten netzwerkfähigen Geräte auszuwählen, wobei die entdeckten netzwerkfähigen Geräte beispielsweise die in Fig. 1 dargestellten Geräte 201 bis 206 sein können.

Ferner kann das mobile Kommunikationsendgerät 100 dazu ausgebildet sein, wenigstens eines der entdeckten netzwerkfähigen Geräte in Abhängigkeit einer Benutzereingabe auszuwählen. Dies kann insbesondere dann vorteilhaft sein, wenn der Vergleich der empfangenen ersten Geräteklasseninformation keine Übereinstimmung mit von den entdeckten netzwerkfähigen Geräten empfangenen Statusinformationen liefert, oder wenn zusammen mit der ersten Geräteklasseninformation eine Information empfangen wird, die angibt, dass ein in dem mit der Kamera 120 aufgenommenen digitalen Bild dargestelltes Gerät nur mit geringer Wahrscheinlichkeit, d.h. insbesondere mit einer Wahrscheinlichkeit unterhalb eines vorgegebenen Grenzwertes, ein Gerät der Geräteklasse ist, welche durch die empfangene erste Geräteklasseninformation identifiziert wird.

Besonders vorteilhaft ist das mobile Kommunikationsendgerät 100 dazu ausgebildet, Netzwerkinformationen 132 in ein auf dem Bildschirm 130 mobilen Kommunikationsendgerätes 100 angezeigtes Bild einzublenden. Insbesondere kann die Einblendung vorteilhaft in ein auf dem Bildschirm 130 angezeigtes Live-Bild erfolgen, so dass beim Benutzer der Effekt einer AR (Augmented Reality) realisiert wird.

Gemäß einem weiteren Aspekt der Erfindung ist ein System 10 zur Erkennung eines netzwerkfähigen Gerätes in einem Heimnetzwerk 410 vorgesehen, wobei das System 10 wenigstens ein oben beschriebenes mobiles Kommunikationsendgerät 100 und einen zentralen Server 300 umfasst, wobei der zentrale Server 300 dazu ausgebildet ist, von einem der mobilen Kommunikationsendgeräte 100 ein digitales Bild zu empfangen und das empfangene digitale Bild in einer Datenbank 320 zu speichern, das empfangene Bild mittels eines künstlichen neuronalen Netzwerks zu verarbeiten, wobei das empfangene Bild oder aus dem Bild abgeleitete Daten dem künstlichen neuronalen Netzwerk zugeführt werden und das künstliche neuronale Netzwerk daraus in Abhängigkeit einer parametrierbaren Verarbeitungskette eine Ausgangsgröße ermittelt, das empfangene Bild in Abhängigkeit der von dem künstlichen neuronalen Netzwerk ermittelten Ausgangsgröße einer Geräteklasse zuzuordnen, und eine erste Geräteklasseninformation in Abhängigkeit der zugeordneten Geräteklasse zu dem mobilen Kommunikationsendgerät 100, von dem das digitale Bild empfangen wurde, zurück zu übertragen, und wobei der zentrale Server 300 ferner dazu ausgebildet ist, eine zweite Geräteklasseninformation von dem mobilen Kommunikationsendgerät 100 zu empfangen, zu welchem die erste Geräteklasseninformation übertragen wurde, und das künstliche neuronale Netzwerk in Abhängigkeit des in der Datenbank 320 gespeicherten digitalen Bildes und der empfangenen zweiten Geräteklasseninformation zu trainieren, wobei das Trainieren ein Anpassen der Parametrierung der Verarbeitungskette des künstlichen neuronalen Netzwerks umfasst.

## Patentansprüche

1. Verfahren zur Erkennung eines netzwerkfähigen Gerätes (201-206) in einem Heimnetzwerk (410) mit den Schritten:
- Aufnehmen eines digitalen Bildes eines zu erkennenden netzwerkfähigen Gerätes (201-206) mit einem mobilen Kommunikationsendgerät (100),
- Übertragen des aufgenommenen digitalen Bildes von dem mobilen Kommunikationsendgerät (100) zu einem zentralen Server (300),
- Speichern des empfangenen Bildes in einer Datenbank (320) durch den zentralen Server (300),
- Verarbeiten des empfangenen Bildes mittels eines künstlichen neuronalen Netzwerks durch den zentralen Server (300), wobei das empfangene Bild oder aus dem Bild abgeleitete Daten dem künstlichen neuronalen Netzwerk zugeführt werden und das künstliche neuronale Netzwerk daraus in Abhängigkeit einer parametrierbaren Verarbeitungskette eine Ausgangsgröße ermittelt,
- Zuordnen des empfangenen Bildes in Abhängigkeit der von dem künstlichen neuronalen Netzwerk ermittelten Ausgangsgröße zu einer Geräteklasse durch den zentralen Server (300),
- Übertragen einer ersten Geräteklasseninformation in Abhängigkeit der zugeordneten Geräteklasse von dem zentralen Server (300) zu dem mobilen Kommunikationsendgerät (100),
- Entdecken von netzwerkfähigen Geräten (201-206), mit denen das mobile Kommunikationsendgerät (100) über ein drahtloses Netzwerk kommunizieren kann,
- Übertragen von Statusinformationen von den jeweiligen entdeckten netzwerkfähigen Geräten (201-206) zu dem mobilen Kommunikationsendgerät (100),
- Auswählen wenigstens eines der entdeckten netzwerkfähigen Geräte (201-206) in Abhängigkeit der übertragenen ersten Geräteklasseninformation oder Angeben einer zweiten Geräteklasseninformation durch den Benutzer des mobilen Kommunikationsendgerätes,
- Anzeigen von Netzwerkinformationen auf einem Bildschirm (120) des mobilen Kommunikationsendgerätes (100),
- Übertragen einer dem ausgewählten netzwerkfähigen Gerät (201-206) zugeordneten zweiten Geräteklasseninformation und/oder der durch den Benutzer angegebenen zweiten Geräteklasseninformation von dem mobilen Kommunikationsendgerät (100) zu dem zentralen Server (300),
- Trainieren des künstlichen neuronalen Netzwerks in Abhängigkeit des in der Datenbank gespeicherten Bildes und der übertragenen zweiten Geräteklasseninformation.

2. Verfahren nach Anspruch 1, wobei das Auswählen des wenigstens einen Gerätes (201-206) ein Vergleichen der von dem zentralen Server (300) zu dem mobilen Kommunikationsendgerät (100) übertragenen ersten Geräteklasseninformation und der von den entdeckten netzwerkfähigen Geräten (201-206) empfangenen Statusinformationen umfasst.

3. Verfahren nach Anspruch 1 oder 2, wobei das Auswählen des wenigstens einen Gerätes (201-206) eine Benutzereingabe an dem mobilen Kommunikationsendgerät (100) umfasst.

4. Verfahren nach einem der vorstehenden Ansprüche, wobei das Anzeigen von Netzwerkinformationen ein Einblenden von Informationen in ein auf dem Bildschirm (120) des mobilen Kommunikationsendgerätes (100) angezeigtes Bild umfasst.

5. Verfahren nach einem der vorstehenden Ansprüche, ferner umfassend die Schritte:
- Speichern der zweiten Geräteklasseninformation in der Datenbank (320), sofern diese nicht bereits in der Datenbank (320) gespeichert ist, und
- Speichern einer Verknüpfungsinformation in der Datenbank (320), welche das in der Datenbank (320) gespeicherte digitale Bild mit der in der Datenbank gespeicherten zweiten Geräteklasseninformation verknüpft.

6. Mobiles Kommunikationsendgerät (100), umfassend
- eine Kamera (120),
- einen Bildschirm (130),
- eine Eingabeeinrichtung (140) für Benutzereingaben,
- eine Speichereinrichtung (160),
- eine Steuereinheit (110) zum Ausführen von in der Speichereinrichtung (160) gespeicherten Anweisungen, und
- eine Kommunikationsschnittstelle (170) zur Kommunikation in einem drahtlosen Netzwerk, wobei
das mobile Kommunikationsendgerät (100) dazu ausgebildet ist,
- netzwerkfähige Geräte (201-206) zu entdecken, mit denen das mobile Kommunikationsendgerät (100) über das drahtlose Netzwerk kommunizieren kann, und Statusinformationen von den jeweiligen entdeckten netzwerkfähigen Geräten (201-206) zu empfangen,
- ein mit der Kamera (120) aufgenommenes digitales Bild zu einem zentralen Server (300) zu übertragen,
- eine erste Geräteklasseninformation von dem zentralen Server (300) zu empfangen, und
- unter Ansprechen auf eine empfangene erste Geräteklasseninformation
- wenigstens eines der entdeckten netzwerkfähigen Geräte (201-206) in Abhängigkeit der empfangenen ersten Geräteklasseninformation auszuwählen und/oder den Benutzer des mobilen Kommunikationsendgerätes (100) zur Eingabe einer zweiten Geräteklasseninformation aufzufordern,
- Netzwerkinformationen auf dem Bildschirm (130) anzuzeigen, und
- eine dem ausgewählten netzwerkfähigen Gerät (201-206) zugeordnete zweite Geräteklasseninformation und/oder die durch den Benutzer angegebene zweite Geräteklasseninformation zu dem zentralen Server (300) zu übertragen.

7. Mobiles Kommunikationsendgerät (100) nach Anspruch 6, dazu ausgebildet, eine von dem zentralen Server (300) empfangene erste Geräteklasseninformation mit von entdeckten netzwerkfähigen Geräten (201-206) empfangenen Statusinformationen zu vergleichen und in Abhängigkeit von dem Vergleichsergebnis wenigstens eines der entdeckten netzwerkfähigen Geräte (201-206) auszuwählen.

8. Mobiles Kommunikationsendgerät (100) nach Anspruch 6 oder 7, dazu ausgebildet, wenigstens eines der entdeckten netzwerkfähigen Geräte (201-206) in Abhängigkeit einer Benutzereingabe auszuwählen.

9. Mobiles Kommunikationsendgerät (100) nach einem der Ansprüche 6 bis 8, dazu ausgebildet, Netzwerkinformationen (132) in ein auf dem Bildschirm (130) mobilen Kommunikationsendgerätes (100) angezeigtes Bild einzublenden.

10. System (10) zur Erkennung eines netzwerkfähigen Gerätes (201-206) in einem Heimnetzwerk (410), umfassend
- wenigstens ein mobiles Kommunikationsendgerät (100) nach einem der Ansprüche 6 bis 9, und
- einen zentralen Server (300), wobei der zentrale Server (300) dazu ausgebildet ist,
- von einem der mobilen Kommunikationsendgeräte (100) ein digitales Bild zu empfangen und das empfangene digitale Bild in einer Datenbank (320) zu speichern,
- das empfangene Bild mittels eines künstlichen neuronalen Netzwerks zu verarbeiten,, wobei das empfangene Bild oder aus dem Bild abgeleitete Daten dem künstlichen neuronalen Netzwerk zugeführt werden und das künstliche neuronale Netzwerk daraus in Abhängigkeit einer parametrierbaren Verarbeitungskette eine Ausgangsgröße ermittelt,
- das empfangene Bild in Abhängigkeit der von dem künstlichen neuronalen Netzwerk ermittelten Ausgangsgröße einer Geräteklasse zuzuordnen, und
- eine erste Geräteklasseninformation in Abhängigkeit der zugeordneten Geräteklasse zu dem mobilen Kommunikationsendgerät (100), von dem das digitale Bild empfangen wurde, zurück zu übertragen,
und wobei der zentrale Server (300) ferner dazu ausgebildet ist,
- eine zweite Geräteklasseninformation von dem mobilen Kommunikationsendgerät (100) zu empfangen, zu welchem die erste Geräteklasseninformation übertragen wurde, und
- das künstliche neuronale Netzwerk in Abhängigkeit des in der Datenbank (320) gespeicherten digitalen Bildes und der empfangenen zweiten Geräteklasseninformation zu trainieren, wobei das Trainieren ein Anpassen der Parametrierung der Verarbeitungskette des künstlichen neuronalen Netzwerks umfasst.

## Claims

1. A method for detecting a network-capable device (201 - 206) in a home network (410), comprising the steps of:
- capturing a digital image of a network-capable device (201 - 206) to be detected using a mobile communication terminal (100);
- transmitting the captured digital image from the mobile communication terminal (100) to a central server (300);
- storing the received image in a database (320) by the central server (300);
- processing the received image by the central server (300) using an artificial neural network, by supplying the received image or data derived from said image to the artificial neural network and the artificial neural network determining an output variable therefrom on the basis of a parameterizable processing chain;
- associating the received image with a device class by the central server (300) on the basis of the output variable determined by the artificial neural network;
- transmitting a first device class information from the central server (300) to the mobile communication terminal (100) on the basis of the associated device class;
- detecting network-capable devices (201 - 206) with which the mobile communication terminal (100) is able to communicate via a wireless network;
- transmitting status information from the respective detected network-capable devices (201 - 206) to the mobile communication terminal (100);
- selecting at least one of the detected network-capable devices (201 - 206) on the basis of the transmitted first device class information, or specifying a second device class information by the user of the mobile communication terminal;
- displaying network information on a screen (120) of the mobile communication terminal (100);
- transmitting second device class information associated with the selected network-capable device (201 - 206) and/or the second device class information specified by the user from the mobile communication terminal (100) to the central server (300);
- training the artificial neural network on the basis of the image stored in the database and the transmitted second device class information.

2. The method according to claim 1, wherein the selecting of the at least one device (201 - 206) comprises comparing the first device class information transmitted from the central server (300) to the mobile communication terminal (100) with status information received from the network-capable devices (201 - 206).

3. The method according to claim 1 or 2, wherein the selecting of the at least one device (201 - 206) comprises a user input on the mobile communication terminal (100).

4. The method according to any one of the preceding claims, wherein the displaying of network information comprises to superimpose information on an image displayed on the screen (120) of the mobile communication terminal (100).

5. The method according to any one of the preceding claims, further comprising the steps of:
- storing the second device class information in the database (320) if it has not already been stored in the database (320); and
- storing linking information in the database (320), which link the digital image stored in the database (320) to the second device class information stored in the database.

6. A mobile communication terminal (100), comprising
- a camera (120) ;
- a screen (130) ;
- an input device (140) for user inputs;
- a storage device (160) ;
- a control unit (110) for executing instructions stored in the storage device (160) ; and
- a communication interface (170) for communication in a wireless network; wherein the mobile communication terminal (100) is configured:
- to detect network-capable devices (201 - 206) with which the mobile communication terminal (100) is able to communicate via the wireless network and to receive status information from the respective detected network-capable devices (201-206);
- to transmit a digital image captured with the camera (120) to a central server (300) ;
- to receive first device class information from the central server (300); and
- in response to received first device class information,
- to select at least one of the detected network-capable devices (201-206) based on the received first device class information, and/or to prompt the user of the mobile communication terminal (100) to enter second device class information;
- to display network information on the screen (130); and
- to transmit, to the central server (300), second device class information associated with the selected network-capable device (201 - 206) and/or the second device class information specified by the user.

7. The mobile communication terminal (100) according to claim 6, configured for comparing first device class information received from the central server (300) with status information received from detected network-capable devices (201 - 206), and for selecting at least one of the detected network-capable devices (201 - 206) on the basis of the comparison result.

8. The mobile communication terminal (100) according to claim 6 or 7, configured for selecting at least one of the detected network-capable devices (201 - 206) on the basis of a user input.

9. The mobile communication terminal (100) according to any one of claims 6 to 8, configured for superimposing network information (132) on an image displayed on the screen (130) of the mobile communication terminal (100).

10. A system (10) for detecting a network-capable device (201 - 206) in a home network (410), comprising
- at least one mobile communication terminal (100) according to any one of claims 6 to 9; and
- a central server (300), wherein the central server (300) is configured for
- receiving a digital image from one of the mobile communication terminals (100) and storing the received digital image in a database (320);
- processing the received image using an artificial neural network, by supplying the received image or data derived from said image to the artificial neural network and the artificial neural network determining an output variable therefrom on the basis of a parameterizable processing chain;
- associating the received image with a device class on the basis of the output variable determined by the artificial neural network; and
- transmitting a first piece of device class information back to the mobile communication terminal (100) from which the digital image was received, on the basis of the associated device class;
and wherein the central server (300) is furthermore configured for
- receiving a second piece of device class information from the mobile communication terminal (100) to which the first device class information was transmitted; and
- training the artificial neural network on the basis of the digital image stored in the database (320) and the received second device class information, wherein the training comprises adapting the parameterization of the processing chain of the artificial neural network.

## Revendications

1. Procédé pour l'identification d'un appareil pouvant être mis en réseau (201-206) dans un réseau domestique (410) avec les étapes consistant à :
- enregistrer une image numérique d'un appareil pouvant être mis en réseau (201-206) à identifier avec un terminal de communication mobile (100),
- transmettre l'image numérique enregistrée à partir du terminal de communication mobile (100) vers un serveur central (300),
- mettre en mémoire l'image enregistrée dans une base de données (320) à l'aide du serveur central (300),
- traiter l'image reçue au moyen d'un réseau de neurones artificiels à l'aide du serveur central (300), où l'image reçue ou les données déduites de l'image sont amenées au réseau de neurones artificiels et le réseau de neurones artificiels détermine à partir de celles-ci une grandeur de sortie en fonction d'une chaîne de traitement pouvant être paramétrée,
- affecter l'image reçue en fonction de la grandeur de sortie déterminée par le réseau de neurones artificiels à une classe d'appareil à l'aide du serveur central (300),
- transmettre une première information de classe d'appareil en fonction de la classe d'appareil affectée à partir du serveur central (300) vers le terminal de communication mobile (100),
- découvrir des appareils pouvant être mis en réseau (201-206), avec lesquels le terminal de communication mobile (100) peut communiquer par l'intermédiaire d'un réseau sans fil,
- transmettre des informations d'état à partir des appareils pouvant être mis en réseau (201-206) découverts respectifs vers le terminal de communication mobile (100),
- sélectionner au moins un des appareils pouvant être mis en réseau (201-206) découverts en fonction de la première information de classe d'appareil transmise ou indiquer une deuxième information de classe d'appareil à l'aide de l'utilisateur du terminal de communication mobile,
- afficher les informations de réseau sur un écran (120) du terminal de communication mobile (100),
- transmettre une deuxième information de classe d'appareil affectée à l'appareil pouvant être mis en réseau (201-206) sélectionné et/ou la deuxième information de classe d'appareil indiquée par l'utilisateur à partir du terminal de communication mobile (100) vers le serveur central (300),
- entraîner le réseau de neurones artificiels en fonction de l'image mise en mémoire dans la base de données et de la deuxième information de classe d'appareil transmise.

2. Procédé selon la revendication 1, dans lequel la sélection de l'au moins un appareil (201-206) comprend une comparaison de la première information de classe d'appareil transmise à partir du serveur central (300) vers le terminal de communication mobile (100) et des informations d'état reçues par les appareils pouvant être mis en réseau (201-206) découverts.

3. Procédé selon la revendication 1 ou 2, dans lequel la sélection de l'au moins un appareil (201-206) comprend une entrée d'utilisateur sur le terminal de communication mobile (100).

4. Procédé selon l'une quelconque des revendications précédentes, dans lequel l'affichage d'informations de réseau comprend une incrustation d'informations dans une image affichée sur l'écran (120) du terminal de communication mobile (100).

5. Procédé selon l'une quelconque des revendications précédentes, comprenant en outre les étapes consistant à :
- mettre en mémoire la deuxième information de classe d'appareil dans la base de données (320), dans la mesure où celle-ci n'est pas déjà mise en mémoire dans la base de données (320), et
- mettre en mémoire une information d'association dans la base de données (320), laquelle associe l'image numérique mise en mémoire dans la base de données (320) à la deuxième information de classe d'appareil mise en mémoire dans la base de données.

6. Terminal de communication mobile (100), comprenant
- une caméra (120),
- un écran (130),
- un dispositif d'entrée (140) pour des entrées d'utilisateur,
- un dispositif mémoire (160),
- une unité de commande (110) pour exécuter les instructions mises en mémoire dans le dispositif mémoire (160), et
- une interface de communication (170) pour la communication dans un réseau sans fil, où
le terminal de communication mobile (100) est réalisé
- pour découvrir des appareils pouvant être mis en réseau (201-206) avec lesquels le terminal de communication mobile (100) peut communiquer par l'intermédiaire du réseau sans fil, et pour recevoir à partir des appareils pouvant être mis en réseau (201-206) découverts respectifs des informations d'état,
- pour transmettre une image numérique enregistrée avec la caméra (120) à un serveur central (300),
- pour recevoir du serveur central (300) une première information de classe d'appareil, et
- en réponse à une première information de classe d'appareil reçue
- pour sélectionner au moins un des appareils pouvant être mis en réseau (201-206) découverts en fonction de la première information de classe d'appareil reçue et/ou pour inviter l'utilisateur du terminal de communication mobile (100) à entrer une deuxième information de classe d'appareil,
- pour afficher des informations de réseau sur l'écran (130), et
- pour transmettre une deuxième information de classe d'appareil affectée à l'appareil pouvant être mis en réseau (201-206) sélectionné et/ou la deuxième information de classe d'appareil indiquée par l'utilisateur au serveur central (300).

7. Terminal de communication mobile (100) selon la revendication 6, qui est réalisé pour comparer une première information de classe d'appareil reçue par le serveur central (300) à des informations d'état reçues des appareils pouvant être mis en réseau (201-206) découverts et pour sélectionner en fonction du résultat de la comparaison au moins un des appareils pouvant être mis en réseau (201-206) découverts.

8. Terminal de communication mobile (100) selon la revendication 6 ou 7, réalisé pour sélectionner au moins un des appareils pouvant être mis en réseau (201-206) découverts en fonction d'une entrée d'utilisateur.

9. Terminal de communication mobile (100) selon l'une quelconque des revendications 6 à 8, réalisé pour incruster des informations de réseau (132) dans une image affichée sur l'écran (130) du terminal de communication mobile (100) .

10. Système (10) pour l'identification d'un appareil pouvant être mis en réseau (201-206) dans un réseau domestique (410), comprenant :
- au moins un terminal de communication mobile (100) selon l'une quelconque des revendications 6 à 9, et
- un serveur central (300), où le serveur central (300) est réalisé
- pour recevoir une image numérique d'un des terminaux de communication mobiles (100) et pour mettre en mémoire l'image numérique reçue dans une base de données (320),
- pour traiter l'image reçue au moyen d'un réseau de neurones artificiels, où l'image reçue ou les données déduites de l'image sont amenées au réseau de neurones artificiels et le réseau de neurones artificiels détermine à partir de celles-ci une grandeur de sortie en fonction d'une chaîne de traitement pouvant être paramétrée,
- pour affecter l'image reçue à une classe d'appareil en fonction de la grandeur de sortie déterminée par le réseau de neurones artificiels, et
- pour retransmettre une première information de classe d'appareil en fonction de la classe d'appareil affectée au terminal de communication mobile (100), duquel l'image numérique a été reçue,
et dans lequel le serveur central (300) est réalisé en outre
- pour recevoir une deuxième information de classe d'appareil du terminal de communication mobile (100), auquel la première information de classe d'appareil a été transmise, et
- pour entraîner le réseau de neurones artificiels en fonction de l'image numérique mise en mémoire dans la base de données (320) et de la deuxième information de classe d'appareil reçue, où l'entraînement comprend une adaptation du paramétrage de la chaîne de traitement du réseau de neurones artificiels.
